(19) Europäisches Patentamt
European Patent Office
Office européen des brevets

(11) **EP 4 411 017 A1**

(12) **EUROPEAN PATENT APPLICATION**
published in accordance with Art. 153(4) EPC

(43) Date of publication:
**07.08.2024   Bulletin 2024/32**

(21) Application number: **22876845.3**

(22) Date of filing: **28.09.2022**

(51) International Patent Classification (IPC):
**C23C 2/06** (2006.01)      **C23C 2/20** (2006.01)
**C23C 2/26** (2006.01)      **C22C 18/04** (2006.01)

(52) Cooperative Patent Classification (CPC):
**C22C 18/04; C23C 2/06; C23C 2/20; C23C 2/26; C23C 2/28**

(86) International application number:
**PCT/KR2022/014558**

(87) International publication number:
**WO 2023/055073 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021   KR 20210129895**

(71) Applicant: **POSCO Co., Ltd**
**Pohang-si, Gyeongsangbuk-do 37859 (KR)**

(72) Inventors:
• **KIM, Tae-Chul**
  **Gwangyang-si, Jeollanam-do 57807 (KR)**

• **KIM, Sung-Joo**
  **Pohang-si, Gyeongsangbuk-do 37877 (KR)**
• **KIM, Myung-Soo**
  **Pohang-si, Gyeongsangbuk-do 37877 (KR)**
• **YOO, Bong-Hwan**
  **Gwangyang-si, Jeollanam-do 57807 (KR)**
• **CHO, Yong-Kyun**
  **Gwangyang-si, Jeollanam-do 57807 (KR)**
• **SOHN, Il-Ryoung**
  **Gwangyang-si, Jeollanam-do 57807 (KR)**

(74) Representative: **Meissner Bolte Partnerschaft mbB**
**Patentanwälte Rechtsanwälte**
**Postfach 86 06 24**
**81633 München (DE)**

(54) **PLATED STEEL SHEET HAVING EXCELLENT CORROSION RESISTANCE AND WHITENESS AND METHOD FOR MANUFACTURING SAME**

(57)    The present invention provides a Zn-Mg-Al plated steel sheet having excellent corrosion resistance and whiteness, and a method for manufacturing same.

FIG. 1

EP 4 411 017 A1

**Description**

Technical Field

The present disclosure relates to a high-corrosion resistance plated steel sheet having excellent corrosion resistance and whiteness and a method for manufacturing the same.

Background Art

When a galvanized steel sheet is exposed to a corrosive environment, a galvanized steel sheet may have sacrificial properties in which zinc, having a lower redox potential than that of iron, is corroded first, such that corrosion of a steel material may be prevented. Also, as zinc in a plating layer oxidizes, dense corrosion products may be formed on the surface of a steel material, thereby blocking the steel material from the oxidizing atmosphere and improving corrosion resistance of the steel material. Due to the advantageous properties, the application of a galvanized steel sheet has been increased to include steel sheets for construction materials, home appliances, and automobiles.

However, the corrosion environment has gradually deteriorated due to an increase in air pollution due to industrial advancement, and due to strict regulations on resource and energy conservation, the need for the development of a steel material having improved corrosion resistance than a conventional galvanized steel material has been increased.

To address this issue, various studies have been conducted on the technique of manufacturing a galvanized alloy plated steel sheet, which may improve corrosion resistance of a steel material by adding elements such as aluminum (Al) and magnesium (Mg) to a galvanizing bath. As a representative example, a Zn-Mg-Al galvanized alloy steel sheet in which Mg is further added to a Zn-Al plating composition system has been used.

However, a Zn-Mg-Al-based galvanized alloy plated steel sheet may be often processed, but may include a large amount of intermetallic compounds having high hardness in a plating layer during a bending process, such that bending processability may be poor, such as causing cracks in the plating layer, which may be disadvantageous. Also, a general Zn-Mg-Al based galvanized alloy plated steel sheet may have poor whiteness, such that there may be technical limitations in application to a high-quality exterior building material.

Accordingly, a level of technology which may satisfy the demand for high-end material having excellent corrosion resistance as well as bendability and/or whiteness has not been developed.

(Cited document 1) Korean Laid-Open Patent Publication No. 2010-0073819

Detailed description of present disclosure

Technical problems to solve

An aspect of the present disclosure is to provide a plated steel sheet having excellent corrosion resistance and whiteness and a method for manufacturing the same.

Also, another aspect of the present disclosure is to provide a plated steel sheet having excellent corrosion resistance, whiteness and bendability and a method for manufacturing the same.

The purpose of present disclosure is not limited to the above aspects. Anyone having ordinary knowledge in the technical field to which the present disclosure belongs may have no difficulty in understanding the additional purpose of the invention from the overall description of the present disclosure.

Solution to Problem

An aspect of the present disclosure provides a plated steel sheet comprising

a base steel sheet; and
a Zn-Mg-Al-based plating layer provided on at least one surface of the base steel sheet,
wherein the Zn-Mg-Al-based plating layer comprised, by weight%, Mg: 4.0 to 6.3%, Al: 11.0 to 19.5%, and a balance of Zn and inevitable impurities, and
satisfies relational expression 1 as below:

[Relational expression 1]

$$0.26 \leq I_{(110)}/I_{(103)} \leq 0.65$$

($I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.)

Another aspect of the present disclosure provides a method for manufacturing a plated steel sheet comprising

hot-dip galvanizing a base steel sheet by immersing the base steel sheet in a plating bath comprising, by weight%, Mg: 4.0 to 6.3%, Al: 11.0 to 19.5%, and a balance of Zn and inevitable impurities, at an immersing temperature of $T_B+10°C$ to $T_B+40°C$ ($T_B$: plating bath temperature);
performing air-wiping by supplying nitrogen gas heated to 25 to 100°C to the hot-dip galvanized steel sheet;
primary cooling the air-wiped steel sheet to 420°C at an average cooling rate of 1.0 to 3.0°C/s; and
secondary cooling the primary cooled steel sheet at an average cooling rate of 3.5 to 5.0°C/s in a temperature range of less than 420°C and 300°C or more,
wherein relational expression 2 as below is satisfied:

[Relational expression 2]

$$0.005 \leq Pair /(Wair \times T)$$

($W_{air}$ is a spacing between air knives, and a unit is mm. $P_{air}$ is pressure of the air knife, and a unit thereof is kPa. T is a temperature of the supplied nitrogen, and a unit thereof is °C.)

Advantageous Effects of Invention

According to an aspect of the present disclosure, a plated steel sheet having excellent corrosion resistance and whiteness and a method for manufacturing the same may be provided.
Also, according to another aspect of the present disclosure, a plated steel sheet having excellent corrosion resistance, whiteness and bendability and a method for manufacturing the same may be provided.
The various and beneficial advantages and effects of the present disclosure are not limited to the above, and will be more easily understood in the course of describing specific embodiments of the present disclosure.

Brief Description of Drawings

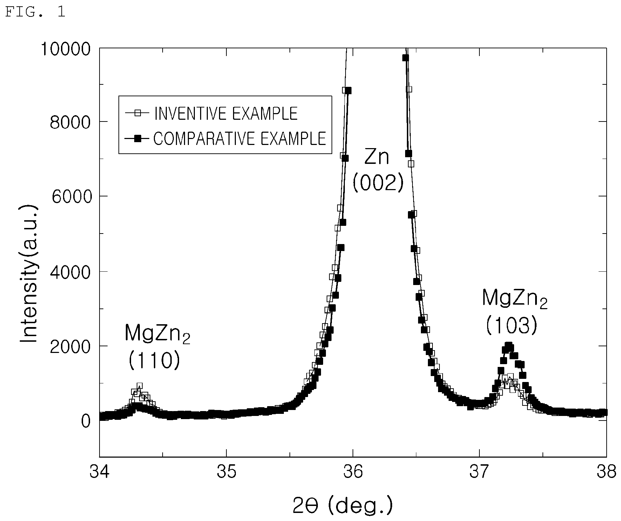

FIG. 1 is a diagram illustrating an X-ray diffraction peak according to an X-ray diffraction angle (2θ) measured by X-ray diffraction (hereinafter, referred to as 'XRD') on a surface of a plating layer with respect to a plated steel sheet obtained from inventive example 8 and comparative example 8.

Best Mode for Invention

The terms used in this specification are intended to describe specific embodiments and are not intended to limit the present disclosure. Also, an expression used in the singular encompasses the expression of the plural, unless it has a clearly different meaning in the context.
The term "comprise" used in the specification specifies components and does not exclude the presence or addition of other components.
Unless otherwise defined, the entirety of terms, including technical and scientific terms, used in this specification may refer to the same as those generally understood by those skilled in the art in the technical field to which the present disclosure belongs. Terms defined in the dictionary are interpreted to have meanings consistent with related technical document and current disclosure.
Hereinafter, [plated steel sheet] according to an aspect of the present disclosure will be described in detail. When indicating the content of each element in the present disclosure, unless specifically defined otherwise, the content may be indicated in weight%.
In a conventional Zn-Mg-Al-based galvanized alloy steel sheet related technology, Mg may be added to improve corrosion resistance. However, when excessive Mg is added, floating dross may increase in a plating bath, such that the dross may need to be removed frequently, which may be problematic, and an upper limit of Mg content may be limited to 3%.

Accordingly, research has been conducted to further improve corrosion resistance by increasing a Mg content from 3%, but as more Mg is added, a large amount of intermetallic compound having high hardness may be included in a plating layer such that there may be a problem of deteriorated bendability (or bending processability), such as causing cracks in a plating layer during a bending process.

In addition to the bendability problem, in the prior art, whiteness of the Zn-Mg-Al-based galvanized alloy plated steel sheet may be insufficient due to absence of diffuse reflection due to an inappropriate crystal phase ratio of a $MgZn_2$-based intermetallic compound. Accordingly, there may be limitations in applying a conventional Zn-Mg-Al based galvanized alloy plated steel sheet to high-quality exterior building materials.

Accordingly, in the prior art, it may be technically difficult to provide a plated steel sheet having assured corrosion resistance and also having excellent bendability and whiteness.

Accordingly, the present inventors conducted intensive studies to solve the above-mentioned problems and to provide a plated steel sheet having excellent corrosion resistance and also excellent bendability and/or whiteness, and founded that it may be important to control a composition of the plating layer, a ratio between X-ray diffraction integrated intensity of a (110) plane crystal peak of the $MgZn_2$ phase obtained by XRD analysis on the surface of the plating layer, and X-ray diffraction integrated intensity of (103) plane crystal of $MgZn_2$ phase to be in a predetermined range, and completed the present disclosure.

Hereinafter, the configuration of a plated steel sheet having excellent corrosion resistance and also excellent bendability and/or whiteness will be described in detail.

First, the plated steel sheet according to the present disclosure may comprise a base steel sheet; and a Zn-Mg-Al-based plating layer provided on at least one surface of the base steel sheet.

In the present disclosure, the type of base steel sheet may not be particularly limited. For example, the base steel sheet may be implemented as an Fe-based base steel sheet used as a base steel sheet of general galvanized steel sheet, that is, a hot-rolled steel sheet or a cold-rolled steel sheet, but an embodiment thereof is not limited thereto. Alternatively, the base steel sheet may be, for example, carbon steel, ultra-low carbon steel, or high manganese steel used as a material for construction, home appliances, and automobiles.

However, as an example, the base steel sheet may have a composition of, in weight%, C: more than 0% (more preferably, 0.001% or more) and 0.18% or less, Si: more than 0% (more preferably, 0.001% or more) and 1.5% or less, Mn: 0.01 to 2.7%, P: more than 0% (more preferably, 0.001% or more) and 0.07% or less, S: more than 0% (more preferably, 0.001% or more) and 0.015% or less, Al: more than 0% (more preferably, 0.001% or more) and 0.5% or less, Nb: more than 0% (more preferably, 0.001% or more) and 0.06% or less, Cr: more than 0% (more preferably, 0.001% or more) and 1.1% or less, Ti: more than 0% (more preferably, 0.001% or more) and 0.06% or less, B: more than 0% (more preferably, 0.001% or more) and 0.03% or less and a balance of Fe and inevitable impurities.

Although not particularly limited, according to an embodiment of the present disclosure, at least one surface of the base steel sheet may be provided with a Zn-Mg-Al-based plating layer consisted of a Zn-Mg-Al-based alloy. The plating layer may be formed on only one surface of the base steel sheet, or may be formed on both surfaces of the base steel sheet. In this case, the Zn-Mg-Al-based plating layer may refer to a plating layer comprising Mg and Al and mainly comprising Zn (comprising more than 50% of Zn).

Although not particularly limited, according to an embodiment of the present disclosure, a thickness of the Zn-Mg-Al-based plating layer may be 5 to 100 μm, more preferably 7 to 90 um. When the thickness of the plating layer is less than 5 μm, the thickness of the plating layer may excessively decrease locally due to errors resulting from the thickness deviation of the plating layer, such that corrosion resistance may deteriorate. When the thickness of the plating layer exceeds 100 μm, cooling of the hot-dip plating layer may be delayed, a solidification defect such as a flow pattern, for example, may occur on the surface of the plating layer, and productivity of the steel sheet may decrease to solidify the plating layer.

Meanwhile, according to an embodiment of the present disclosure, although not particularly limited, an Fe-Al-based inhibition layer may be further comprised between the base steel sheet and the Zn-Mg-Al-based plating layer. The Fe-Al-based inhibition layer may mainly comprise an intermetallic compound of Fe and Al (e.g., more than 60%), and examples of the intermetallic compound of Fe and Al may comprise FeAl, $FeAl_3$, and $Fe_2Al_5$. Also, some components derived from the plating layer, such as Zn and Mg, may be further comprised, for example, up to 40%. The inhibition layer may be formed due to alloying by Fe and plating bath components diffused from the base steel sheet at an initial stage of plating. The inhibition layer may improve adhesion between the base steel sheet and the plating layer, and may also prevent Fe diffusion from the base steel sheet to the plating layer. The inhibition layer may be formed continuously between the base steel sheet and the Zn-Mg-Al-based plating layer, or may be formed discontinuously. In this case, other than the above-mentioned description, regarding the inhibition layer, a commonly known description in the relevant technical field may be applied.

Although not particularly limited, according to an embodiment of the present disclosure, a thickness of the inhibition layer may be 0.1 to 1 um. The inhibition layer may assure corrosion resistance by preventing alloying, but as the layer is brittle, the layer may affect processability, and accordingly, a thickness thereof may be determined to be 1 $\mu$m or less. However, to function as a inhibition layer, the thickness may be 0.1 um or more. In terms of further improving the above-mentioned effect, preferably, an upper limit of the thickness of the inhibition layer may be 1.00 um, or a lower limit of the inhibition layer thickness may be 0.15 $\mu$m.

In this case, the thickness of the inhibition layer may refer to a minimum thickness in the thickness direction with respect to the inhibition layer, obtained by manufacturing a cross-sectional sample cut from a plated steel sheet in the thickness direction (i.e., the direction perpendicular to the rolling direction) and imaging the cross-section using a scanning electron microscope (hereinafter referred to as 'SEM').

Also, according to the present disclosure, the plating layer may comprise, by weight%, Mg: 4.0 to 6.3%, Al: 11.0 to 19.5%, and a balance of Zn and inevitable impurities. In the description below, the reason for adding each component and the reason for content limitation will be described in detail.

Mg: 4.0% or more and 6.3% or less

Mg may improve corrosion resistance of a plated steel material. In the present disclosure, an Mg content in the plating layer may be controlled to be 4.0% or more to assure desired excellent corrosion resistance. When Mg is added excessively, dross may occur, and also intermetallic compounds having high hardness may be excessively formed in the plating layer such that bendability may be deteriorated. Accordingly, the Mg content may be controlled to 6.3% or less.

Al: 11.0% or more and 19.5% or less

Generally, when Mg is added at 1% or more, the effect of improving corrosion resistance may be exhibited, but when Mg is added at 2% or more, floating dross may increase in a plating bath due to oxidation of Mg in the plating bath, such that it may be necessary to reduce dross. Due to this problem, in the prior art, by adding more than 1.0% of Mg in Zn-Mg-Al-based zinc alloy plating, corrosion resistance may be assured, and an upper limit of Mg content may be determined to be 3.0% for commercialization.

However, in the present disclosure, to further improve corrosion resistance, it may be necessary to increase the Mg content to 4% or more. However, when the plating layer comprises 4% or more of Mg, dross may occur due to oxidation of Mg in the plating bath, which may be problematic, such that it may be necessary to add 11.0% or more of Al. When Al is added excessively to suppress dross, a melting point of the plating bath may increase and an operating temperature may thus increase excessively, such that problems caused by high-temperature work, such as erosion of the plating bath structure and deterioration of the steel material, may occur. Accordingly, it may be preferable to control an upper limit of Al content in the plating layer to 19.5%.

Balance of Zn and inevitable impurities

In addition to the composition of the plating layer described above, a balance of Zn and other inevitable impurities may be further comprised. Inevitable impurities may comprise components unintentionally mixed in a process of manufacturing a general hot-dip galvanized steel sheet, and a person skilled in the relevant technical field may easily understand the addition.

Meanwhile, according to the present disclosure, the plated steel sheet may satisfy relational expression 1 as below in order to secure corrosion resistance and excellent bendability and/or whiteness at the desired level.

$$[\text{Relational expression 1}]$$

$$0.26 \leq I_{(110)}/I_{(103)} \leq 0.65$$

($I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.)

The present inventors found that a ratio of the presence of (110) plane crystals of the $MgZn_2$ phase and a (103) plane crystals of the $MgZn_2$ phase present in the plating layer may be an important factor in improving bendability and whiteness of the plating layer. That is, by controlling a ratio between X-ray diffraction integrated intensity of the (110) plane crystal peak of a $MgZn_2$ phase obtained by analyzing by XRD on the surface of the plating layer to satisfy the above relational expression 1, and X-ray diffraction integrated intensity of (103) plane crystal of $MgZn_2$ phase, excellent corrosion resistance may be assured and bendability and whiteness may also improve.

In the present disclosure, an increase in (110) plane crystals of the $MgZn_2$ phase may reduce lattice mismatch of the crystal phase formed parallel to the surface of the plating layer with the Zn phase, thereby reducing cracks in the $MgZn_2$ phase and improving bendability. However, an increase in (103) plane crystals of the $MgZn_2$ phase may have the disadvantage of increasing cracks as the crystal phase is formed in a direction perpendicular to the plating layer surface. Accordingly, to improve bendability, it may be necessary to properly harmonize the two crystal planes of the aforementioned $MgZn_2$ phase. Also, a combination ratio between the (110) plane crystal of the $MgZn_2$ phase and the (103) plane crystal of the $MgZn_2$ phase may affect diffuse reflection on the surface of the plated steel sheet, and accordingly, by controlling the (110) plane crystal of the $MgZn_2$ phase and the (103) plane crystal of the $MgZn_2$ phase at an appropriate ratio, an increase in diffuse reflection may be induced such that whiteness may be improved.

Accordingly, when the $I_{(110)}/I_{(103)}$ value defined from the above relational expression 1 is less than 0.26, the ratio between the (103) plane crystal of the $MgZn_2$ phase and the (110) plane crystal of the $MgZn_2$ phase may be excessive, such that bendability or whiteness may become insufficient. When the $I_{(110)}/I_{(103)}$ value defined from relational expression 1 exceeds 0.65, the ratio between the (110) plane crystal of the $MgZn_2$ phase and the (103) plane crystal of the $MgZn_2$ phase may be too excessive, diffuse reflection may not be induced, such that whiteness may become insufficient.

According to the present disclosure, by mixing the above-mentioned (110) plane crystal of the $MgZn_2$ phase and the (103) plane crystal of the $MgZn_2$ phase to satisfy relational expression 1, excellent bendability may be assured, and also the surface may be shiny and excellent whiteness properties may be obtained by diffuse reflection. Moreover, as the ratio between the (110) crystal plane of the $MgZn_2$ phase and the (103) crystal plane of the $MgZn_2$ phase as described above satisfies relational expression 1, and also the (002) plane crystal of the Zn phase, which is the main crystal, is also present, diffuse reflection may increase significantly.

Meanwhile, according to an embodiment of the present disclosure, although not particularly limited, in terms of maximizing the above-mentioned effect, more preferably, a lower limit of the $I_{(110)}/I_{(103)}$ value defined from relational expression 1 may be 0.55, or an upper limit of the $I_{(110)}/I_{(103)}$ value may be 0.64.

In this case, as for the (110) plane crystal peak of the above-described $MgZn_2$ phase and the (103) plane crystal peak of the $MgZn_2$ phase, the (110) plane crystal peak and (103) plane crystal peak may be distinguished using methods known in the art from the X-ray diffraction integrated intensity obtained by analyzing the surface of the plating layer with XRD, which may thus not be separately defined in this specification.

Meanwhile, the method of measuring the X-ray diffraction integrated intensity may not be particularly limited, and a method known in the art may be applied. For example, the surface of the plating layer may be analyzed by XRD to measure the X-ray diffraction integrated intensity, and a RINT2000 diffractometer may be used as a device to measure the X-ray diffraction integrated intensity, and X-ray diffraction integrated intensity measurement conditions may comprise Cu target, voltage: 40kV, current: 200mA, and the X-ray diffraction angle ($2\theta$) may be measured from 10 to 100°. As a representative example, when a Cu target is used, $I_{(110)}$ may be defined as the integrated intensity of the peak between $2\theta = 34.0°$ to 34.6°, and $I_{(103)}$ may be defined as integrated intensity of the peak between $2\theta=37.0°$ to 37.5°. However, when the target material is changed to Mo, or the like, the value of $2\theta$ may change depending on the type of target material, such that the range of $2\theta$ is not particularly limited in the present disclosure.

Also, in this specification, the $MgZn_2$ crystal having the (110) plane may refer to a structure in which the (110) plane appears among hexagonal crystals of the $MgZn_2$ phase on the surface of a steel sheet. Also, the $MgZn_2$ crystal having the (103) plane may refer to a structure in which the (103) plane appears among hexagonal crystals of the $MgZn_2$ phase on the surface of a steel sheet.

Meanwhile, according to an embodiment of the present disclosure, although not particularly limited, in the plated steel sheet, optionally, the value of $I_{(110)}$ may satisfy the range of 120 to 200. By ensuring that the value of $I_{(110)}$ satisfies the range of 120 to 200, the ratio of the (110) plane crystal of the $MgZn_2$ phase in the range satisfying the relational expression 1 may increase, such that bendability of the plated steel sheet may further improve, and whiteness may also further improve.

Alternatively, according to an embodiment of the present disclosure, although not particularly limited, in the plated steel sheet, optionally, the value of $I_{(103)}$ may satisfy the range of 240 to 300. By ensuring that the value of $I_{(103)}$ satisfies the range of 240 to 300, the ratio of the (110) plane crystal of the $MgZn_2$ phase, which reduces cracks, may increase within the range satisfying relational expression 1, and the ratio of (103) plane crystals in the $MgZn_2$ phase, which reduces cracks, may be reduced, such that bendability of the plated steel sheet may improve, and whiteness may also further improve. In this case, the value of $I_{(110)}$ and the value of $I_{(103)}$ represent values measured using a RINT2000 diffractometer under the conditions of a Cu target, voltage: 40 kV and current: 200 mA.

Meanwhile, according to an embodiment of the present disclosure, although not particularly limited, optionally, surface roughness of the plated steel sheet may satisfy the range of Ra: 1.0 to 1.7 um and Rpc: 10 to 30 (/10 mm) . By ensuring that surface roughness of the plated steel sheet satisfies the above-mentioned range, diffuse reflection may be uniformly formed in a space, such that whiteness of the plated steel sheet may be further improved.

In the description below, the [method of manufacturing plated steel sheet] according to another aspect of the present disclosure will be described in detail. However, the plated steel sheet in the present disclosure may need to be manufactured by the manufacturing method below.

According to an embodiment of the present disclosure, preparing a base steel sheet may be further comprised, and the type of the base steel sheet is not particularly limited. A Fe-based base steel sheet used as the base steel sheet of the general galvanized steel sheet may be a hot-rolled steel sheet or a cold-rolled steel sheet, but an embodiment thereof is not limited thereto. Also, the base steel sheet may be, for example, carbon steel, ultra-low carbon steel, or high manganese steel used as a material for construction, home appliances, and automobiles, but an embodiment thereof is not limited thereto. In this case, the above description may be applied to the base steel sheet.

Thereafter, hot-dip galvanization may be performed by immersing the base steel sheet in a plating bath comprising, by weight%, Mg: 4.0 to 6.3%, Al: 11.0 to 19.5%, and a balance of Zn and inevitable impurities.

In this case, according to an embodiment of the present disclosure, as for the reason for adding components and limiting content in the plating bath described above, excluding the small amount of Fe content which may flow from the base steel sheet, the description of the components of the plating layer described above may be applied.

Meanwhile, to manufacture a plating bath of the above-described composition, a composite ingot comprising predetermined Zn, Al and Mg or a Zn-Mg or a Zn-Al ingot comprising individual components may be used. To replenish the plating bath consumed by hot-dip plating, the ingot may be further melted and supplied. In this case, the ingot may be dissolved by being directly immersed in a plating bath, or the ingot may be melted in a separate pot and the molten metal may be added to the plating bath.

According to the present disclosure, during the hot-dip galvanizing, an immersing temperature of the base steel sheet may be controlled to satisfy the range of $T_B+10°C$ to $T_B+40°C$ based on a plating bath temperature ($T_B$). When the immersing temperature of the base steel sheet is less than $T_B+10°C$, interfacial adhesion may be insufficient, such that the problem of dross adhesion may occur. When the immersing temperature of the base steel sheet exceeds $T_B+40°C$, generation of ash (Zn fume) may increase and ash may be adsorbed to the steel sheet, which may cause problems in plating surface quality. Meanwhile, although not particularly limited, the plating bath temperature ($T_B$) may range from 440 to 500°C, more preferably, from 440 to 490°C.

Thereafter, air-wiping may be performed by supplying nitrogen gas heated to 25 to 100°C (more preferably, more than 25°C and 100°C or less) to the hot-dip galvanized steel sheet. As a result of extensive research, the present inventors conducted air-wiping by supplying nitrogen gas heated to a specific temperature range, differently from the general method, and found that appropriate surface roughness was assured such that diffuse reflection was uniformized in a space, and accordingly, a plated steel sheet having improved whiteness may be manufactured.

In other words, when the temperature of the nitrogen gas supplied during the air-wiping is less than 25°C, an uneven color difference may occur in the width direction of the steel sheet due to rapid cooling of the steel sheet, which may be problematic. When the temperature of the nitrogen gas supplied during air-wiping exceeds 100°C, cooling may be difficult such that productivity may decrease, which may be problematic.

In terms of maximizing the above-mentioned effect, more preferably, a lower limit of the temperature of the nitrogen gas supplied during the air-wiping may be 30°C, or an upper limit for the temperature of nitrogen gas supplied during the air-wiping may be 85°C.

Meanwhile, according to the present disclosure, the air-wiping may be controlled to satisfy relational expression 2. By controlling the conditions of air-wiping to satisfy relational expression 2 below, a steel sheet having excellent whiteness uniformly in the width direction may be produced. In this case, relational expression 2 may be a value obtained empirically, such that a unit thereof may not be specifically determined, and it may be sufficient to satisfy the $W_{air}$ unit mm, $P_{air}$ unit kPa, and T unit °C defined below.

$$[\text{Relational expression 2}]$$

$$0.005 \leq P_{air} / (W_{air} \times T)$$

($W_{air}$ is a spacing between air knives, and a unit is mm. $P_{air}$ is pressure of the air knife, and a unit is kPa. T is a temperature of the supplied nitrogen, and a unit is °C.)

According to the present disclosure, after the air-wiping, primary cooling may be performed on the air-wiped steel sheet to 420°C (based on a surface temperature) at an average cooling rate of 1.0 to 3.0°C/s. Thereafter, secondary cooling may be performed on the primarily cooled steel sheet at an average cooling rate of 3.5 to 5.0°C/s in a temperature range of less than 420°C and 300°C or more.

As a result of careful study, present inventors found that, by performing slow cooling while precisely controlling the cooling rate in two stages, surface properties may be uniformly assured in the width direction of the steel sheet.

In other words, when an average cooling rate is less than 1.0°C/s during the primary cooling, a problem of lack of productivity may occur, and when the rate exceeds 3.0°C/s during the primary cooling, non-uniform solidification properties of the steel sheet may occur, which may be problematic. Also, during secondary cooling, when the average cooling rate is less than 3.5°C/s, there may be a problem of insufficient productivity, and when the average cooling rate exceeds 5.0°C/s during secondary cooling, the ratio between the (110) plane crystal of the $MgZn_2$ phase and the (103) plane crystal of the $MgZn_2$ phase may not be appropriate, such that the desired surface structure may not be formed.

Meanwhile, according to an embodiment of the present disclosure, although not particularly limited, optionally, cooling conditions may be controlled to satisfy relational expression 3 below during the cooling. By controlling the relationship between the average cooling rate during the primary cooling and the secondary cooling as in relational expression 3 below, the formation ratio between the (110) plane crystal of the $MgZn_2$ phase and the (103) plane crystal of the $MgZn_2$ phase may be optimized, such that whiteness of plated steel sheet may be further improved. In this case, since relational expression 3 below may be a value obtained empirically, a unit thereof may not be specifically determined, and it may be sufficient to satisfy each unit of $C_1$ and $C_2$ defined below.

$$[\text{Relational expression 3}]$$

$$1 + C_1/C_2 \leq C_2 \leq C_1 \times 1.6$$

($C_1$ is an average cooling rate [°C/s] during primary cooling, and $C_2$ is an average cooling rate [°C/s] during secondary cooling.)

Meanwhile, according to an embodiment of the present disclosure, although not particularly limited, optionally, surface roughness of the plated steel sheet obtained by the secondary cooling may be controlled to be in the range of Ra: 1.0 to 1.7 um and Rpc: 10 to 30 (/10 mm). By controlling the surface roughness Ra and Rpc of the plated steel sheet to satisfy the above range, the effect of forming diffuse reflection uniformly in a space may be assured.

As described above, by precisely controlling the plating composition and manufacturing conditions, a plated steel sheet having excellent corrosion resistance and also excellent bendability and whiteness may be effectively provided.

Mode for Invention

Hereinafter, the present disclosure will be described in greater detail through embodiments. However, it may be important to note that the embodiments may be only intended to describe the present disclosure through examples and is not intended to limit the scope of rights of the present disclosure. This is because the scope of rights in present disclosure is determined by matters stated in the claims and matters reasonably inferred therefrom.

(Embodiment)

A base steel sheet having a composition of C: 0.018%, Si: 0.01%, Mn: 0.2%, P: 0.009%, S: 0.005%, Al: 0.1%, Nb: 0.02%, Cr: 0.2%, Ti: 0.02%, B: 0.015%, and a balance of Fe and inevitable impurities and having a thickness of 1.5 mm and a width of 1200 mm may be prepared. The prepared base steel sheet was hot-dip galvanized by being immersed in a plating bath under the conditions as in Table 1 below.

Thereafter, an air-wiping treatment was performed on the hot-dip galvanized steel sheet using nitrogen ($N_2$) gas under the conditions as in Table 1 below, and primary cooling and secondary cooling were performed under the conditions as in Table 2 below. Thereafter, the steel sheet obtained by the secondary cooling was controlled to have surface roughness in Table 2 below.

[Table 1]

| | Plating conditions | Air-wiping conditions | | | | |
|---|---|---|---|---|---|---|
| | Plating bath compositio n [wt%] (Balance of Zn and inevitable impurities ) | | Platin g bath temper ature [°C] | Base steel sheet immersin g temperat ure [°C] | Spacing between air knives [mm] | Air knife pressure [kPa] | Nitr ogen temp erat ure [°C] |
| No. | Mg | Al | | | | | |
| Inventi ve example 1 | 4.0 | 11.0 | 440 | 460 | 20 | 10 | 30 |

(continued)

| No. | Plating conditions | Air-wiping conditions | Plating bath temperature [°C] | Base steel sheet immersing temperature [°C] | Spacing between air knives [mm] | Air knife pressure [kPa] | Nitrogen temperature [°C] |
|---|---|---|---|---|---|---|---|
| | Plating bath composition [wt%] (Balance of Zn and inevitable impurities) | | | | | | |
| | Mg | Al | | | | | |
| Inventive example 2 | 4.4 | 11.4 | 450 | 460 | 25 | 11 | 35 |
| Inventive example 3 | 4.9 | 12.2 | 455 | 465 | 30 | 12 | 40 |
| Inventive example 4 | 5.4 | 14.4 | 460 | 482 | 35 | 13 | 45 |
| Inventive example 5 | 5.7 | 17.5 | 475 | 496 | 40 | 14 | 50 |
| Inventive example 6 | 6.1 | 19.2 | 490 | 513 | 45 | 15 | 55 |
| Inventive example 7 | 4.6 | 11.6 | 460 | 480 | 30 | 16 | 65 |
| Inventive example 8 | 5.1 | 12.3 | 455 | 485 | 35 | 17 | 75 |
| Inventive example 9 | 6.3 | 19.5 | 490 | 530 | 40 | 18 | 85 |
| Comparative example 1 | 3.8 | 9.1 | 440 | 440 | 30 | 12 | 40 |
| Comparative example 2 | 6.4 | 10.2 | 450 | 450 | 35 | 13 | 45 |
| Comparative example 3 | 5.7 | 7.9 | 470 | 470 | 40 | 14 | 50 |
| Comparative example 4 | 7.1 | 14.4 | 490 | 490 | 45 | 15 | 55 |
| Comparative example 5 | 3.7 | 8.9 | 440 | 440 | 30 | 12 | 38 |
| Comparative example 6 | 6.3 | 10.2 | 450 | 450 | 35 | 13 | 44 |
| Comparative example 7 | 5.6 | 7.9 | 470 | 475 | 39 | 5 | 30 |
| Comparative example 8 | 7.2 | 20.0 | 490 | 480 | 35 | 9 | 55 |

(continued)

| No. | Plating conditions — Plating bath composition [wt%] (Balance of Zn and inevitable impurities) Mg | Al | Plating bath temperature [°C] | Base steel sheet immersing temperature [°C] | Spacing between air knives [mm] | Air knife pressure [kPa] | Nitrogen temperature [°C] |
|---|---|---|---|---|---|---|---|
| Comparative example 9 | 7.6 | 19.1 | 490 | 495 | 50 | 13 | 60 |
| Comparative example 10 | 4.3 | 8.0 | 470 | 465 | 45 | 14 | 70 |
| Comparative example 11 | 4.8 | 6.5 | 460 | 455 | 30 | 11 | 80 |
| Comparative example 12 | 6.7 | 10.8 | 470 | 470 | 25 | 10 | 90 |
| Comparative example 13 | 7.8 | 21.0 | 510 | 490 | 25 | 10 | 90 |
| Comparative example 14 | 6.5 | 10.7 | 460 | 450 | 30 | 11 | 80 |
| Comparative example 15 | 6.9 | 7.8 | 490 | 480 | 40 | 5 | 30 |
| Comparative example 16 | 4.9 | 12.5 | 500 | 520 | 10 | 40 | 90 |
| Comparative example 17 | 6.2 | 19.4 | 510 | 500 | 20 | 30 | 80 |

[Table 2]

| No. | Primary cooling to 420°C — Average cooling rate [°C/s] | Secondary cooling in temperature range of less than 420°C and 300°C or more — Average cooling rate [°C/s] | Surface roughness Ra [μm] | Number of surface peaks Rpc [/10 mm] |
|---|---|---|---|---|
| Inventive example 1 | 1.0 | 5.0 | 1.65 | 10 |
| Inventive example 2 | 1.2 | 4.5 | 1.60 | 13 |
| Inventive example 3 | 1.4 | 4.3 | 1.58 | 15 |

(continued)

| No. | Primary cooling to 420°C | Secondary cooling in temperature range of less than 420°C and 300°C or more | Surfac e roughn ess | Number of surface peaks |
|---|---|---|---|---|
| | Average cooling rate [°C/s] | Average cooling rate [°C/s] | Ra [μm] | Rpc [/10 mm] |
| Inventi ve example 4 | 1.6 | 3.8 | 1.50 | 17 |
| Inventi ve example 5 | 1.8 | 3.9 | 1.43 | 22 |
| Inventi ve example 6 | 3.0 | 5.0 | 1.03 | 30 |
| Inventive example 7 | 2.3 | 3.5 | 1.18 | 25 |
| Inventi ve example 8 | 2.5 | 3.6 | 1.15 | 20 |
| Inventi ve example 9 | 2.6 | 3.7 | 1.34 | 19 |
| Compara tive example 1 | 2.9 | 7.5 | 0.68 | 62 |
| Compara tive example 2 | 2.6 | 7.0 | 0.74 | 68 |
| Compara tive example 3 | 2.7 | 6.6 | 0.72 | 71 |
| Compara tive example 4 | 3.1 | 6.4 | 0.70 | 58 |
| Compara tive example 5 | 3.1 | 3.5 | 0.92 | 49 |
| Compara tive example 6 | 3.2 | 3.8 | 0.88 | 55 |
| Compara tive example 7 | 3.6 | 3.9 | 0.84 | 57 |
| Compara tive example 8 | 4.0 | 4.3 | 0.51 | 78 |
| Compara tive example 9 | 4.5 | 5.0 | 0.46 | 82 |
| Compara tive example 10 | 3.9 | 4.6 | 0.50 | 80 |
| Compara tive example 11 | 4.3 | 4.8 | 0.42 | 90 |
| Compara tive example 12 | 4.7 | 5.2 | 0.34 | 101 |
| Compara tive example 13 | 0.4 | 3.7 | 2.03 | 8 |
| Compara tive example 14 | 1.0 | 2.5 | 2.22 | 6 |

(continued)

| No. | Primary cooling to 420°C | Secondary cooling in temperature range of less than 420°C and 300°C or more | Surface roughness | Number of surface peaks |
|---|---|---|---|---|
| | Average cooling rate [°C/s] | Average cooling rate [°C/s] | Ra [$\mu$m] | Rpc [/10 mm] |
| Compara tive example 15 | 0.8 | 1.2 | 2.53 | 4 |
| Compara tive example 16 | 4.9 | 12.5 | 2.17 | 7 |
| Compara tive example 17 | 6.2 | 19.4 | 2.32 | 5 |

A sample of the plated steel sheet obtained by the method in Tables 1 to 2 was prepared, the plating layer was dissolved in a hydrochloric acid solution, the dissolved liquid was analyzed by wet analysis (ICP) to measure the composition of the plating layer, and was listed in Table 3 (a balance of Zn and inevitable impurities are comprised).

Also, a cross-sectional sample cut in the direction perpendicular to the rolling direction of the steel sheet was manufactured such that an interfacial surface between the plating layer and the base steel sheet was able to observed, the sample was imaged using an SEM, and it was confirmed that a Fe-Al-based inhibition layer was formed between the base steel sheet, the Zn-Mg-Al-based plating layer, and the base steel sheet and the Zn-Mg-Al-based plating layer.

Also, to measure X-ray diffraction integrated intensity of the plating layer, a diffraction peaks $MgZn_2$ (110) and $MgZn_2$ (103) at $2\theta = 34.0°$ to $38.0°$ was measured under the conditions of a Cu target, voltage: 40kV, and current: 200mA using a RINT2000 diffractometer, and integrated intensity of the corresponding peak was calculated. Integrated intensity $I_{(110)}$ is a value obtained by integrating the peak from $34°$ to $34.6°$, and integrated intensity $I_{(103)}$ is a value obtained by integrating the peak from $37°$ to $37.5°$ (unit is integrated intensity, corresponding to cps*$2\theta$), and the values were listed in Table 3 below.

[Table 3]

| No. | Plating layer composition [wt%] | | Fe-Al-based inhibit ion layer | Calculated integrated intensity of X-ray diffraction peaks on plating layer surface | | |
|---|---|---|---|---|---|---|
| | Mg | Al | Average thickne ss [$\mu$m] | $I_{(110)}$ | $I_{(103)}$ | $I_{(110)}/I_{(103)}$ |
| Inventi ve example 1 | 4.0 | 11.0 | 0.15 | 94 | 304 | 0.31 |
| Inventi ve example 2 | 4.4 | 11.5 | 0.22 | 113 | 289 | 0.39 |
| Inventi ve example 3 | 4.9 | 12.3 | 0.37 | 91 | 190 | 0.48 |
| Inventi ve example 4 | 5.4 | 14.5 | 0.45 | 103 | 184 | 0.56 |
| Inventi ve example 5 | 5.7 | 17.6 | 0.67 | 101 | 172 | 0.59 |
| Inventi ve example 6 | 6.1 | 19.3 | 0.92 | 102 | 165 | 0.62 |
| Inventi ve example 7 | 4.6 | 11.7 | 0.25 | 134 | 244 | 0.55 |
| Inventi ve example 8 | 5.1 | 12.4 | 0.39 | 150 | 242 | 0.62 |

(continued)

| No. | Plating layer composition [wt%] | | Fe-Al-based inhibit ion layer | Calculated integrated intensity of X-ray diffraction peaks on plating layer surface | | |
|---|---|---|---|---|---|---|
| | Mg | Al | Average thickne ss [μm] | $I_{(110)}$ | $I_{(103)}$ | $I_{(110)}/I_{(103)}$ |
| Inventi ve example 9 | 6.3 | 19.5 | 1.00 | 192 | 300 | 0.64 |
| Compara tive example 1 | 3.8 | 9.2 | 0.07 | 54 | 540 | 0.10 |
| Compara tive example 2 | 6.4 | 10.3 | 0.09 | 101 | 532 | 0.19 |
| Compara tive example 3 | 5.7 | 7.8 | 0.05 | 59 | 538 | 0.11 |
| Compara tive example 4 | 7.1 | 14.5 | 0.43 | 102 | 167 | 0.61 |
| Compara tive example 5 | 3.7 | 9.0 | 0.07 | 83 | 521 | 0.16 |
| Compara tive example 6 | 6.3 | 10.3 | 0.09 | 105 | 524 | 0.20 |
| Compara tive example 7 | 5.6 | 8.0 | 0.07 | 65 | 538 | 0.12 |
| Compara tive example 8 | 7.2 | 20.1 | 1.23 | 107 | 160 | 0.67 |
| Compara tive example 9 | 7.6 | 19.2 | 0.95 | 102 | 162 | 0.63 |
| Compara tive example 10 | 4.3 | 8.1 | 0.06 | 89 | 556 | 0.16 |
| Compara tive example 11 | 4.8 | 6.6 | 0.03 | 58 | 580 | 0.10 |
| Compara tive example 12 | 6.7 | 10.9 | 0.15 | 71 | 308 | 0.23 |
| Compara tive example 13 | 7.8 | 21.1 | 2.12 | 107 | 153 | 0.70 |
| Compara tive example 14 | 6.5 | 10.8 | 0.08 | 73 | 521 | 0.14 |
| Compara tive example 15 | 6.9 | 7.9 | 0.05 | 71 | 543 | 0.13 |
| Compara tive example 16 | 4.9 | 12.5 | 2.67 | 87 | 350 | 0.25 |
| Compara tive example 17 | 6.2 | 19.4 | 2.23 | 82 | 330 | 0.25 |

As for each inventive example and comparative example, corrosion resistance, bendability and whiteness were evaluated based on the criteria as below, and the evaluation results of each properties were listed in Table 4 below.

<Corrosion resistance>

In order to evaluate corrosion resistance, corrosion resistance was evaluated according to the criteria as below using a salt spray tester (SST) using a test method in accordance with ISO14993.

∘: The time taken for red rust is 30 times or more and less than 40 times relative to that of Zn plating of the same thickness.

△: The time taken for red rust is 20 times or more and less than 30 times relative to that of Zn plating of the same thickness.

✕: The time taken for red rust is less than 20 times relative to that of Zn plating of the same thickness

<Bendability>

In order to evaluate cracks in the bent portion, the material was cut into 30 mm × 100 mm, and the number of cracks formed within 10 mm of the length after 3t bending was observed using FE-SEM.

◉: Less than 3
∘: 3 or more but less than 10
△: 10 or more but less than 20
✕: 20 or more

<Whiteness>

To evaluate whiteness, the L value was measured using an X-Rite 8200 device and was evaluated according to the criteria as below.

◉: L value of 90 or more
∘: L value of 85 or more and less than 90
△: L value of 75 or more and less than 85
✕: L value of less than 75

[Table 4]

| No. | Corrosion resistance | Bendabili ty | Whiteness |
|---|---|---|---|
| Inventive example 1 | ◯ | ◯ | ◯ |
| Inventive example 2 | ◯ | ◯ | ◯ |
| Inventive example 3 | ◯ | ◯ | ◯ |
| Inventive example 4 | ◯ | ◯ | ◯ |
| Inventive example 5 | ◯ | ◯ | ◯ |
| Inventive example 6 | ◯ | ◯ | ◯ |
| Inventive example 7 | ◯ | ◎ | ◎ |
| Inventive example 8 | ◯ | ◎ | ◎ |
| Inventive example 9 | ◯ | ◎ | ◎ |
| Comparativ e example 1 | × | Δ | × |
| Comparativ e example 2 | ◯ | Δ | × |
| Comparativ e example 3 | × | ◯ | × |
| Comparativ e example 4 | ◯ | × | Δ |
| Comparativ e example 5 | × | Δ | Δ |
| Comparativ e example 6 | ◯ | Δ | Δ |
| Comparativ e example 7 | ◯ | Δ | Δ |
| Comparativ e example 8 | ◯ | Δ | Δ |
| Comparativ e example 9 | ◯ | Δ | Δ |

(continued)

| No. | Corrosion resistance | Bendabili ty | Whiteness |
|---|---|---|---|
| Comparativ e example 10 | × | Δ | Δ |
| Comparativ e example11 | × | Δ | Δ |
| Comparativ e example 12 | ○ | × | × |
| Comparativ e example 13 | ○ | × | × |
| Comparativ e example 14 | ○ | × | × |
| Comparativ e example 15 | ○ | × | × |
| Comparativ e example 16 | ○ | × | × |
| Comparativ e example 17 | ○ | × | × |

As may be seen from the experimental results in Table 4 above, in inventive examples 1 to 9 satisfying the plating composition and manufacturing conditions specified in the present disclosure, corrosion resistance, bendability and whiteness were excellent.

In particular, among the inventive examples, in inventive example 7 to 9 satisfying the cooling rate of relational expression 3 specified in the present disclosure, bendability and whiteness were superior to inventive example 1 to 6.

In comparative example 1 to 17, which does not satisfy the entirety of the plating composition and manufacturing conditions specified in the present disclosure, one or more properties of corrosion resistance, bendability and plating adhesion were poorer than those of inventive example 1 to 9.

In particular, as for the plated steel sheet obtained from inventive example 8 and comparative example 8, the diffraction peaks $MgZn_2$ (110) and $MgZn_2$ (103) according to the X-ray diffraction angle ($2\theta$ = 34.0° to 38.0°) measured by XRD on the surface of the plating layer were measured and listed in FIG. 1. From FIG. 1, the integrated intensity $I_{(110)}$ was obtained by integrating the peak in the range of $2\theta$ = 34 ° to 34.6 °, the integrated intensity $I_{(103)}$ was obtained by integrating the peak in the range of $2\theta$ = 37 ° to 37.5 °, and the $I_{(110)}/I_{(103)}$ value was calculated. Accordingly, inventive example 8 satisfied relational expression 1 and had excellent corrosion resistance, bendability, and whiteness, while comparative example 8 did not satisfy relational expression 1, such that even though corrosion resistance is assured, bendability and whiteness were poorer than inventive example 8.

**Claims**

1.  A plated steel sheet, comprising:

    a base steel sheet; and
    a Zn-Mg-Al-based plating layer provided on at least one surface of the base steel sheet,
    wherein the Zn-Mg-Al-based plating layer comprises, by weight%, Mg: 4.0 to 6.3%, Al: 11.0 to 19.5%, and a balance of Zn and inevitable impurities, and satisfies relational expression 1 as below:

    [Relational expression 1]

    $$0.26 \leq I_{(110)}/I_{(103)} \leq 0.65$$

    where $I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.

2.  The plated steel sheet of claim 1, further comprising:
    a Fe-Al-based inhibition layer provided between the base steel sheet and the Zn-Mg-Al-based plating layer.

3.  The plated steel sheet of claim 2, wherein an average thickness of the Fe-Al-based inhibition layer is 0.1 to 1 μm.

4.  The plated steel sheet of claim 1, wherein a value of $I_{(110)}$ satisfies a range of 120 to 200.

5. The plated steel sheet of claim 1, wherein a value of $I_{(103)}$ satisfies a range of 240 to 300.

6. The plated steel sheet of claim 1, wherein surface roughness of the plated steel sheet satisfies a range of Ra: 1.0 to 1.7 um and Rpc: 10 to 30 (/10 mm).

7. A method for manufacturing a plated steel sheet, the method comprising:

hot-dip galvanizing a base steel sheet by immersing the base steel sheet in a plating bath comprising, by weight%, Mg: 4.0 to 6.3%, Al: 11.0 to 19.5%, and a balance of Zn and inevitable impurities, at an immersing temperature of $T_B+10°C$ to $T_B+40°C$ ($T_B$: plating bath temperature);
performing air-wiping by supplying nitrogen gas heated to 25 to 100°C to the hot-dip galvanized steel sheet;
primary cooling the air-wiped steel sheet to 420°C at an average cooling rate of 1.0 to 3.0°C/s; and
secondary cooling the primary cooled steel sheet at an average cooling rate of 3.5 to 5.0°C/s in a temperature range of less than 420°C and 300°C or more,
wherein relational expression 2 as below is satisfied:

[Relational expression 2]

$$0.005 \leq P_{air} / (W_{air} \times T)$$

where $W_{air}$ is a spacing between air knives, and a unit is mm, $P_{air}$ is pressure of the air knife, and a unit thereof is kPa, T is a temperature of the supplied nitrogen, and a unit thereof is °C.

8. The method of claim 7, wherein relational expression 3 is satisfied:

[Relational expression 3]

$$1 + C_1/C_2 \leq C_2 \leq C_1 \times 1.6$$

where $C_1$ represents an average cooling rate [°C/s] during primary cooling, and $C_2$ represents an average cooling rate [°C/s] during secondary cooling.

9. The method of claim 7, wherein surface roughness of a plated steel sheet obtained by the secondary cooling is controlled in a range of Ra: 1.0 to 1.7 um and Rpc: 10 to 30 (/10 mm) .

FIG. 1

**EP 4 411 017 A1**

## INTERNATIONAL SEARCH REPORT

| International application No. |
| --- |
| **PCT/KR2022/014558** |

| A. | CLASSIFICATION OF SUBJECT MATTER |
| --- | --- |
| | **C23C 2/06**(2006.01)i; **C23C 2/20**(2006.01)i; **C23C 2/26**(2006.01)i; **C22C 18/04**(2006.01)i |

According to International Patent Classification (IPC) or to both national classification and IPC

| B. | FIELDS SEARCHED |
| --- | --- |

Minimum documentation searched (classification system followed by classification symbols)

C23C 2/06(2006.01); C22C 18/04(2006.01); C23C 2/04(2006.01); C23C 2/26(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금(plating), 아연(Zn), 마그네슘(Mg), 알루미늄(Al), Zn-Mg-Al, 합금도금강판 (alloy plated steel sheet)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0035722 A (POSCO et al.) 01 April 2021 (2021-04-01) <br> See claims 1 and 9. | 1-9 |
| A | KR 10-2017-0076924 A (POSCO) 05 July 2017 (2017-07-05) <br> See paragraph [0039] and claims 1, 14 and 16. | 1-9 |
| A | JP 2021-004403 A (NIPPON STEEL CORP.) 14 January 2021 (2021-01-14) <br> See claims 1-2. | 1-9 |
| A | KR 10-2021-0077953 A (POSCO) 28 June 2021 (2021-06-28) <br> See claims 1 and 4. | 1-9 |
| A | JP 2004-360056 A (NISSHIN STEEL CO., LTD.) 24 December 2004 (2004-12-24) <br> See claim 1. | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 December 2022** | **13 December 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/014558**

| Patent document cited in search report | | | Publication date (day/month/year) | Patent family member(s) | | | Publication date (day/month/year) |
|---|---|---|---|---|---|---|---|
| KR | 10-2021-0035722 | A | 01 April 2021 | CN | 114466948 | A | 10 May 2022 |
| | | | | EP | 4036270 | A1 | 03 August 2022 |
| | | | | KR | 10-2384674 | B1 | 11 April 2022 |
| | | | | US | 2022-0341017 | A1 | 27 October 2022 |
| | | | | WO | 2021-060879 | A1 | 01 April 2021 |
| KR | 10-2017-0076924 | A | 05 July 2017 | CN | 108474093 | A | 31 August 2018 |
| | | | | CN | 108474093 | B | 30 October 2020 |
| | | | | EP | 3396004 | A1 | 31 October 2018 |
| | | | | EP | 3396004 | B1 | 21 July 2021 |
| | | | | ES | 2893003 | T3 | 07 February 2022 |
| | | | | JP | 2019-501296 | A | 17 January 2019 |
| | | | | JP | 6830489 | B2 | 17 February 2021 |
| | | | | KR | 10-1767788 | B1 | 14 August 2017 |
| | | | | US | 10907243 | B2 | 02 February 2021 |
| | | | | US | 2019-0010595 | A1 | 10 January 2019 |
| | | | | WO | 2017-111400 | A1 | 29 June 2017 |
| JP | 2021-004403 | A | 14 January 2021 | None | | | |
| KR | 10-2021-0077953 | A | 28 June 2021 | EP | 4079924 | A1 | 26 October 2022 |
| | | | | KR | 10-2305753 | B1 | 27 September 2021 |
| | | | | WO | 2021-125630 | A1 | 24 June 2021 |
| JP | 2004-360056 | A | 24 December 2004 | None | | | |

Form PCT/ISA/210 (patent family annex) (July 2022)